Europäisches Patentamt

(19) European Patent Office

Office européen des brevets

(11) Numéro de publication : **0 114 019**
**B1**

(12) FASCICULE DE BREVET EUROPÉEN

(45) Date de publication du fascicule du brevet :
**23.03.88**

(51) Int. Cl.⁴ : **A 01 G 13/00**

(21) Numéro de dépôt : **83420189.9**

(22) Date de dépôt : **19.12.83**

(54) **Appareil pour favoriser la prolifération des micro-organismes nécessaires au développement des végétaux.**

(30) Priorité : **20.12.82 FR 8221605**

(43) Date de publication de la demande :
**25.07.84 Bulletin 84/30**

(45) Mention de la délivrance du brevet :
**23.03.88 Bulletin 88/12**

(84) Etats contractants désignés :
**AT BE CH DE GB IT LI LU NL SE**

(56) Documents cités :
**DE-A- 1 782 101**
**FR-A- 2 356 361**
**GB-A- 769 696**

(73) Titulaire : **JEAN, Gilbert**
**100 Rue Desmoulins Bâtiment A**
**F-26000 Valence (FR)**

**JEAN, Maurice**
**100 Rue Desmoulins Bâtiment A**
**F-26000 Valence (FR)**

(72) Inventeur : **JEAN, Gilbert**
**100 Rue Desmoulins Bâtiment A**
**F-26000 Valence (FR)**
Inventeur : **JEAN, Maurice**
**100 Rue Desmoulins Bâtiment A**
**F-26000 Valence (FR)**

(74) Mandataire : **Schmitt, John**
**Cabinet John Schmitt 9, rue Pizay**
**F-69001 Lyon (FR)**

### Description

Actuellement, on observe fréquemment des retards dans le développement des arbustes, arbres, conifères, végétaux de toutes sortes, même des dépérissements progressifs desdits végétaux, ceci aussi bien en jardins d'agrément qu'en zone de terres compactées ou couvertes d'herbe, de prairie ou de gazon.

La cause principale de ces échecs réside dans le fait que les conditions ne sont pas réunies pour avoir un développement satisfaisant des micro-organismes du sol et des échanges radiculaires indispensables au bon développement des végétaux.

L'invention concerne un appareil susceptible de favoriser le développement des micro-organismes du sol indispensables aux végétaux selon le préambule de la revendication 1.

A cet effet, l'appareil dont il s'agit consiste en une jupe tronconique très évasée destinée à coiffer les racines de l'arbuste ou de l'arbre dans le sol et surmontée d'une collerette émergeant du sol et entourant le tronc, la jupe et la collerette étant pourvues de gouttières creusées sur leur face interne et le long des génératrices.

On connaît déjà des appareils destinés à protéger les végétaux. Notamment le brevet FR-A-2 484 773 décrit une cloche de protection pour pied de vigne, constituée en matière plastique, présentant une seule ouverture centrale pour la pousse, une zone de guidage s'y rattachant et présentant une paroi légèrement courbée dans la direction de l'ouverture et une zone de pose ayant la forme d'un tronc de cône. La protection assurée est aérienne, seule une partie de la base de la cloche peut être partiellement ou totalement enterrée. Si ce dispositif évite le dessèchement du sol, il présente l'inconvénient de collecter toute l'eau de pluie et de ce fait peut provoquer un excédent d'eau entraînant une pourriture. La cloche dont il s'agit est apparente. La collerette prévue a une vocation de guidage de la pousse.

Par le brevet FR-A-2 433 291, on connaît une soucoupe permettant la protection et l'amélioration de la culture de petites plantes diverses ; cette soucoupe est réalisée en deux parties s'assemblant jointives face-à-face autour d'un pied de plante, réservant au centre une surface circulaire à trou central pour le passage du pied de la plante et présentant deux surfaces circulaires, l'une centrale s'élevant du centre de la soucoupe vers le bord, la seconde surface circulaire s'étendant autour de la première mais dirigée vers le bas. Cet appareil n'est utilisé que pour de petites plantes. Les deux parties face-à-face conservent l'humidité, une partie de l'appareil est en surface. L'accrochage des deux parties est fixe, donc n'est pas susceptible d'extension au cours du développement de la plante.

Le brevet FR-A-2 129 266 décrit un perfectionnement aux pots pour pépiniéristes constitué par un disque en matière souple percé en son centre et fendu suivant un rayon pour permettre un recouvrement des bords du disque et former une sorte d'entonnoir. Ce dispositif est placé à la surface du pot et fait converger vers le trou central l'eau d'arrosage des plantes.

Le brevet FR-A-1 357 381 décrit une coupelle de protection des végétaux contre les mauvaises herbes, la sécheresse, la chaleur ou le froid. Sa forme en cuvette permet de récupérer les eaux de ruissellement, mais peut conduire à une sursaturation d'humidité néfaste au développement des végétaux, bien qu'elle soit prévue en matière poreuse.

Les appareils ainsi décrits protègent les végétaux mais ne sont pas susceptibles de doser l'accumulation d'eau ou d'engrais, ce qui peut provoquer la pourriture des végétaux ou leur destruction par un surplus d'engrais. D'autre part cas appareils sont disposés en surface ou n'ont que l'extrémité de leur base dans le sol. Ils sont constitués par une ou deux pièces préalablement assemblées. Leur forme, cloche, coupe ou coupelle ou cuvette est responsable des inconvénients susmentionnés.

L'appareil imaginé est de vocation différente, il engendre un milieu particulièrement propice au développement des micro-organismes du sol et des échanges radiculaires par une humidité constamment satisfaisante et une aération adéquate indispensables aux végétaux.

Un premier but de l'invention est de fournir un appareil récepteur d'un peu d'eau de pluie ou d'arrosage et susceptible d'éloigner le trop plein des racines de la plante, de manière à favoriser l'implantation et l'extension desdites racines de l'arbre ou du végétal dans le sol.

Un autre but de l'invention est de constituer une réserve d'air confiné propice au bon développement de la vie des micro-organismes nécessaires à la plante et aux échanges radiculaires.

Un autre but de l'invention est de permettre une condensation au niveau interne, près des racines, ce qui assure un apport d'eau à la plante aux moments chauds de l'année, quand elle en a le plus besoin, ou dans les régions chaudes et sèches, ou lors de plantations sans arrosage.

Un autre but de l'invention est de provoquer un recyclage continuel de l'eau au niveau des racines tout en empêchant son évaporation.

Un autre but de l'invention est de fournir une régulation de la température de la zone d'implantation des racines.

Enfin, un autre but de l'invention est de protéger les racines des herbes parasites qui ne peuvent pas pénétrer dans la zone vitale (le collet de l'arbre), ni dans la zone des racines surtout au début de la reprise après la plantation, tout en autorisant l'implantation de gazon près de l'arbre du fait de l'isolement par la jupe tronconique des deux systèmes radiculaires.

L'appareil dont il s'agit est caractérisé par le fait que la jupe coiffant les racines du végétal dans le sol, et sa collerette émergeant du sol et entourant le tronc comportent des gouttières sur leur face interne et le long des génératrices de manière à guider et à répartir l'eau vers les racines.

Dans ce qui suit, l'invention est exposée plus en détail à l'aide de dessins représentant seulement un mode d'exécution :

La figure 1 est une vue en élévation de l'appareil ;

La figure 2 en est une vue en plan par-dessus ;

La figure 3 est une vue de face d'une des parties de l'appareil montrant les gouttières qui la creusent ;

La figure 4 est une vue en perspective à petite échelle montrant l'appareil coiffant les racines d'un végétal.

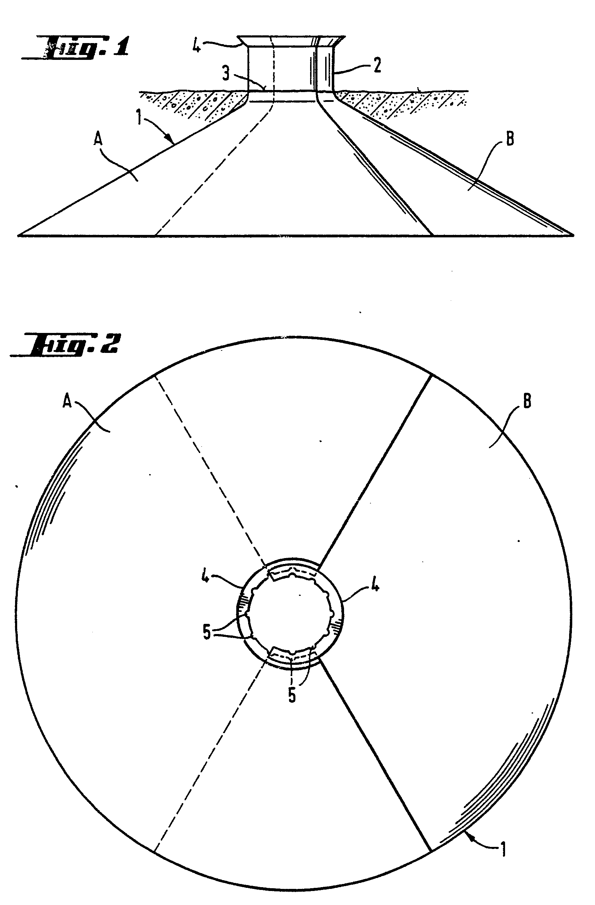

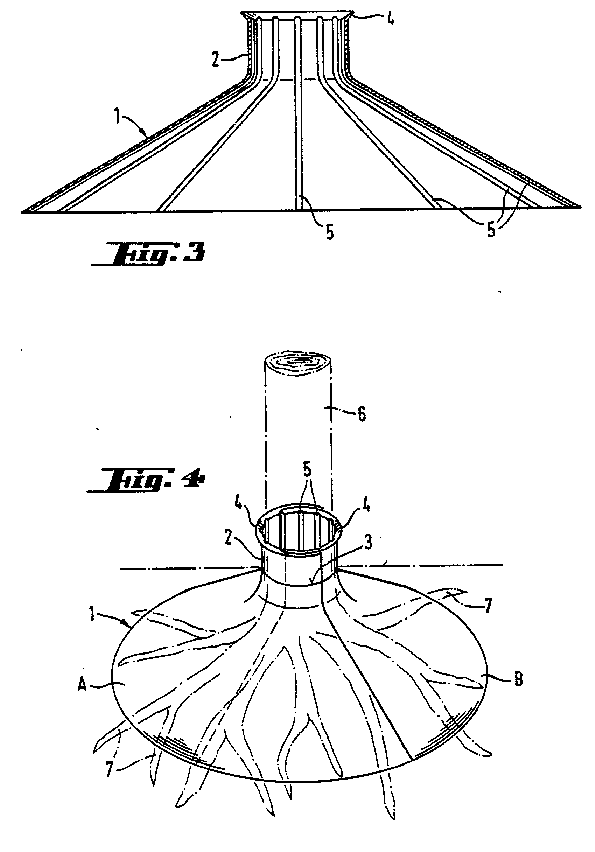

Les figures 1 à 4 permettent de voir que l'appareil est constitué de deux parties identiques A et B que l'on place en vis-à-vis et dont on fait pénétrer les bords de l'une dans le volume intérieur de l'autre pour former une jupe tronconique 1, les collerettes 2 se recouvrant partiellement ainsi que les parties évasées de la jupe pour former un ensemble relié, dans la zone de la collerette, par un lien élastique 3. Chacune des parties A, B représentant une fraction supérieure à la moitié d'un tronc de cône. Le haut de la collerette 2 est assorti d'un petit rebord saillant 4 d'où partent des gouttières 5 creusées dans la face interne de la collerette 2 et de la jupe 1, suivant les génératrices, ce qu'illustrent plus particulièrement les figures 2 et 3.

La jupe tronconique, formée par l'association des deux parties A et B, est destinée à être enterrée ; elle a une inclinaison correspondant à la plongée des racines 7 dans le sol. Elle est donc posée sur les racines du végétal qui ont été préalablement légèrement recouvertes de terre. Seule la collerette 2 dépasse un peu le niveau du sol et entoure le collet 6 de l'arbuste ou du végétal.

L'appareil est réalisé en matière plastique ou autre matière composée par exemple de plusieurs couches présentant les caractéristiques nécessaires à une bonne condensation tout en étant le cas échéant bio-dégradable ou susceptible de servir en tout ou partie d'aliment pour la plante.

L'entrée d'eau de ruissellement et/ou d'arrosage se fait au niveau du rebord 4 de la collerette 2 par les gouttières qui y prennent naissance. L'eau suit chacune d'entre elles et se répartit vers les racines, ce qui favorise leur implantation et leur extension dans le sol.

En cas de surabondance d'eau, le trop plein est éloigné des racines 7 par ruissellement à la surface de l'appareil.

Entre temps, lorsque les gouttières 5 ne sont pas saturées d'eau elles permettent de constituer entre la jupe tronconique et les racines un magasin d'air confiné nécessaire au bon développement de la vie des micro-organismes indispensables à la plante et aux échanges radiculaires et constamment renouvelé.

La jupe tronconique 1 est en matière assez épaisse et imperméable ce qui permet une condensation à son niveau, près des racines, ce qui constitue un apport d'eau à la plante. La collerette 2 et la jupe tronconique 1 assurent un dosage des eaux de pluie et/ou d'arrosage, du fait même de leur structure combinée et le phénomène de condensation qui se produit entraîne un recyclage continuel de l'eau au niveau des racines, tout en empêchant son évaporation. Le recyclage de l'eau et la petite circulation d'air permettent une régulation naturelle de la température au niveau des racines.

L'élasticité du lien 3 qui maintient les deux parties A et B de l'appareil en position de recouvrement partiel, autorise la diminution dudit recouvrement au fur et à mesure du développement du végétal tant au niveau du tronc 6 qu'au niveau des racines 7.

La jupe tronconique 1 joue un rôle protecteur contre les herbes qui tendraient à concurrencer le végétal cultivé dans cette zone vitale pour lui et déterminée par ladite jupe, l'appareil n'interdisant pas l'implantation de gazon auprès du végétal protégé. L'appareil protège en outre le végétal de l'action des petits outils aratoires.

L'appareil peut servir de nombreuses années, autant que la vie du végétal ou de l'arbre se perpétue, ou plusieurs fois s'il s'agit de végétaux à vie courte. L'appareil peut être utilisé pour tous végétaux, dans tous milieux, à la plantation ou après la plantation.

Il va de soi que des modifications peuvent être apportées au dispositif qui vient d'être décrit, notamment pour améliorer la stabilité ou la protection du pied de l'arbre par exemple, par une légère augmentation de la hauteur de la collerette sans pour autant sortir du cadre de la présente invention.

## Revendications

1. Appareil pour favoriser la prolifération des micro-organismes nécessaires au développement des végétaux, constitué par une jupe tronconique (1) pourvue, le long d'une partie de certaines génératrices, de gouttières, enterrée et coiffant les racines (7) du végétal dans le sol et surmontée d'une collerette (2) émergeant du sol et entourant le tronc (6), caractérisé par le fait que les gouttières (5) sont creusées dans la face interne de la collerette (2) et se prolongent dans la face interne de la jupe (1), complètement le long des génératrices, la jupe étant très évasée.

2. Appareil suivant la revendication 1, caractérisé par le fait qu'il est en deux parties identiques (A, B) qui se recouvrent partiellement, chacune des parties représentant une fraction supérieure à la moitié d'un tronc de cône.

3. Appareil suivant les revendications 1 et 2, caractérisé par le fait que les deux parties (A, B) de l'appareil se recouvrant partiellement sont réunies par un lien élastique (3) placé autour de la collerette (2).

4. Appareil suivant la revendication 1, caractérisé par le fait que la jupe tronconique (1) et la collerette (2) sont réalisées en matière plastique épaisse et imperméable.

5. Appareil suivant la revendication 1, caractérisé par le fait que la jupe (1) et la collerette (2) sont réalisées en matière à plusieurs couches biodégradables susceptibles ou non d'alimenter en tout ou partie le végétal protégé.

6. Appareil suivant la revendication 1, caractérisé par le fait que la collerette (2) comporte à sa partie supérieure un rebord saillant (4) où prennent naissance les gouttières (5).

## Claims

1. Device favouring the proliferation of microorganisms needed to grow vegetables and comprising a truncated skirt (1) fitted along one part of certain generators with gutters embedded and covering over the roots (7) of the vegetable in the soil and topped by a plunged boss (2) emerging from the soil and surrounding the stem (6), characterized in that the gutters (5) are hollowed in the inner face of the plunged boss (2) and extend into the inner face of the skirt (1) completely along the generators, the skirt being highly flare-shaped.

2. Device according to claim 1, characterized in that it consists of two identical parts (A, B) which partly cover each of the parts representing a fraction in excess of half a truncated cone.

3. Device according to claims 1 and 2, characterized in that the two partly covering parts of the device are joined together by an elastic link (3) place around the plunged boss (2).

4. Device according to claim 1, characterized in that the truncated skirt (1) and the plunged boss (2) are made of thick impervious plastic.

5. Device according to claim 1, characterized in that the skirt (1) and plunged boss (2) consist of a material with several biodegradable layers possibly likely to feed all or part of the protected vegetable.

6. Device according to claim 1, characterized in that the plunged boss (2) includes at its upper part a projecting shoulder (4) where the gutters (5) start.

## Patentansprüche

1. Vorrichtung zur Förderung der Vermehrung von Mikroorganismen, die zur Entwicklung der Pflanzen notwendig sind, bestehend aus einen kegelstumpfartigen Mantel (1), der an bestimmten Mantellinien mit Regenrinnen versehen ist, erdverlegt angewandt wird und die Wurzeln (7) der Pflanze in der Erde überdeckt sowie mit einem Kragen (2) versehen ist, der aus der Erde herausragt und den Pflanzenstamm (6) umgibt, dadurch gekennzeichnet, daß die Regenrinnen (5) auf der Innenseite des Kragens (2) angebracht sind und auf der Innenseite des Mantels (1) über die gesamte Länge der Mantellinien fortlaufen, wobei der Mantel stark aufgeweitet ist.

2. Vorrichtung entsprechend Patentanspruch 1, dadurch gekennzeichnet, daß sie aus zwei identischen Teilen (A, B) besteht, die sich teilweise gegenseitig überdecken, wobei jeder der beiden Teile mehr als die Hälfte eines Kegelstumpfes ausmacht.

3. Vorrichtung entsprechend Patentanspruch 1 und 2, dadurch gekennzeichnet, daß die beiden sich gegenseitig überdeckenden Teile (A, B) der Vorrichtung durch eine elastische Verbindung (3) zusammengehalten werden, die um den Kragen (2) angebracht ist.

4. Vorrichtung entsprechend Patentanspruch 1, dadurch gekennzeichnet, daß der kegelstumpfartige Mantel (1) und der Kragen (2) aus dickem wasserdichten Kunststoff gefertigt sind.

5. Vorrichtung entsprechend Patentanspruch 1, dadurch gekennzeichnet, daß der Mantel (1) und der Kragen (2) aus einen mehrschichtigen, biologisch abbaubaren Material bestehen, das geeignet sein kann, der von der Vorrichtung geschützten Pflanze ganz oder teilweise als Dünger zu dienen.

6. Vorrichtung entsprechend Patentanspruch 1, dadurch gekennzeichnet, daß der Kragen (2) in seinem oberen Teil einen Vorsprung (4) aufweist, an dem die Regenrinnen (5) ansetzen.

*Fig. 1*

*Fig. 2*

_Fig. 3_

_Fig. 4_